# EUROPEAN PATENT SPECIFICATION

(11) **EP 1 307 977 B1**
(45) Date of publication and mention of the grant of the patent: **25.03.2009**
(21) Application number: 01950305.1
(22) Date of filing: 15.06.2001
(51) Int. Cl.: H04B 7/185, H04B 1/38

(54) **SATELLITE COMMUNICATION CARD**
SATELLITEN KOMMUNIKATIONSKART
CARTE DE COMMUNICATIONS SATELLITE

(30) Priority: 15.06.2000 US 211528 P; 14.06.2001 US 880103
(43) Date of publication of application: 07.05.2003
(73) Proprietor: Spacenet, Inc., McLean, VA 22102 (US); Gilat Satellite Networks Ltd., 49130 Keryat Arye Petah Tikva (IL)
(72) Inventor: BEN-BASSAT, Itzik, Gilat Satellite Networks, Ltd, Petah Tikva 49130 (IL); OPHIR, Ido, Gilat Satellite Networks, Ltd, Petah Tikva 49130 (IL); BONEH, Rafi, Gilat Satellite Networks, Ltd, Petah Tikva 49130 (IL); GAL, Yossi, Gilat Satellite Networks, Ltd, Petah Tikva 49130 (IL); GOLDFARB, Ariel, Gilat Satellite Networks, Ltd, Petah Tikva 49130 (IL); MARCUS, Tal, Gilat Satellite Networks, Ltd, Petah Tikva 49130 (IL); SHAFIR, Ofer, Gilat Satellite Networks, Ltd, Petah Tikva 49130 (IL); RAHAMIM, David, Gilat Satellite Networks, Ltd, Petah Tikva 49130 (IL); COMFORTI, Amir, Gilat Satellite Networks, Ltd, Petah Tikva 49130 (IL); HAYOUN, Yariv, Gilat Satellite Networks, Ltd, Petah Tikva 49130 (IL); SHEICH, Oren, Gilat Satellite Networks, Ltd, Petah Tikva 49130 (IL); RIDEL, Eran, Gilat Satellite Networks, Ltd, Petah Tikva 49130 (IL); OSSDON, Ilan, Gilat Satellite Networks, Ltd, Petah Tikva 49130 (IL)
(74) Representative: Wallin, Nicholas James
(86) International application number: PCT/US2001/019199
(87) International publication number: WO 2001/097403

(56) References cited:
- EP-A- 0 276 932
- EP-A- 0 734 140
- WO-A-97/26762
- WO-A-99/13616
- US-A- 5 742 639

## Description

### BACKGROUND OF THE INVENTION

### 1. Field of the Invention

The present invention relates to the field of satellite communications. More particularly, the present invention relates to personal computer cards for use in satellite communication by radio frequency.

### 2. Description of the Related Art

Very small aperture terminals (VSATs), comprising a small satellite dish or flat-plate antenna and appropriate modulating and demodulating hardware coupled to a dedicated computer, are known in the art as devices for transferring data directly between locations via a satellite. VSATs are typically used for data exchange in point-to-multipoint data networks, such as automated teller machines (ATMs) and point-of-sale systems, and may also be used for other types data transfer, such as direct video broadcasting (DVB).

Personal computer cards capable of receiving signals directly from satellite transmissions are also known in the art. For example, Gilat Satellite Networks Ltd., of Petah Tikva, Israel, produces a satellite receiver card called "SkySurfer" for installation in a personal computer. The card plugs into an industry-standard PCI bus, and is designed to receive direct video broadcasts using a coaxial cable connected to a dish antenna.

European patent application EP 0-734-140, describes a portable satellite communications terminal based on a personal computer (PC). An interface card is inserted into the PC, enabling the PC to communicate with a satellite antenna through an external modulation/demodulation unit followed by an external radio frequency (RF) subsystem coupled to the antenna.

International patent application WO 97/26762 describes a printed circuit board that is placed within a card slot of a personal computer. The printed circuit board allows the personal computer to receive information directly from a satellite communication network. An IFL link is used to connect the computer to an antenna.

### SUMMARY OF THE INVENTION

It is an object of the present invention to provide for a transmitter and receiver installed in external box that connects to a PC through a Universal Serial Bus ("USB") interface, where the USB external bus standard can be any one of a series of USB standards well known in the art.

In a preferred embodiment of the present invention, a satellite transceiver for communication between a satellite and a personal computer, the personal computer being equipped with a USB (Universal Serial Bus) port, characterised in that the satellite transceiver resides in a box external to the personal computer and is equipped with a USB port for interfacing with the personal computer, the transceiver comprising:
a transceiver card with means for receiving data from the personal computer via the USB port, means for converting the data to radio frequency signals and means for transmitting these signals to the satellite;
a receiver card with means for receiving radio frequency signals from the satellite, means for converting the radio frequency signals to data for transmission to the computer via the USB port and means for transmitting the data to the computer.
   Preferably, the two cards include respective USB interfaces, and the transceiver further includes a USB hub that couples the USB port to the two USB interfaces via a USB bus.

Preferably, the transceiver further includes an auxiliary bus that connects the two cards directly to each other via respective connectors. A synchronizing signal is conveyed from the receiver card to the transmitter card via the auxiliary bus.

Preferably, the transceiver further includes an internal DC source, residing in the box, for supplying power to the two cards.

Preferably, the transmitter card includes a frequency synthesizer for generating the radio frequency signals. The frequency of the generated signals is set, either by a controller on the transmitter card or by instructions conveyed via the USB port.

Preferably, the card is coupled to an external antenna system and further includes a connector through which a DC source, that is internal to the box, powers the antenna system. The transmitter card includes radio frequency modulation circuitry that is coupled to convey the radio frequency signals to the antenna via the connector. The radio frequency modulation circuitry also modulates the transmitted signals according to a predefined protocol in accordance with a command conveyed to the card via the USB port. The radio frequency modulation circuitry includes an encoder that encodes error correction into the transmitted signals according to another predefined protocol in accordance with a command conveyed to the encoder via the USB port.

Preferably, the signals are transmitted to a satellite.

There is further provided, in accordance with a preferred embodiment of the present invention, a method for communication between a satellite and a personal computer, the personal computer being equipped with a USB (Universal Serial Bus) port, characterised in that a satellite transceiver residing in a box external to the personal computer and equipped with a USB port for interfacing the personal computer is used for communication between the personal computer and the satellite, the method comprising the steps of:
with a transmitter card of the satellite transceiver, receiving data from the personal computer via the USB port, converting the data to radio frequency signals and transmitting these signals to the satellite;
with a receiver card of the satellite transceiver, receiving radio frequency signals from the satellite, converting the radio frequency signals to data for transmission to the personal computer via the USB port and transmitting the data to the computer.

Preferably, the method further includes the step of coupling the transmitter card to a USB hub through a portion of a USB bus; coupling the USB hub to the USB port; coupling the receiver card to the USB hub through another portion of the USB bus.

Preferably, the method further includes the step of coupling the transmitter and receiver cards together directly via an auxiliary bus.

Preferably, the method further includes the steps of mounting a power connector on the box and powering an antenna system external to the box via the power connector.

Preferably, the method further includes the step of determining a frequency band of the signal using the data received by the transmitter card.

Preferably, the transmitting of the radio frequency signal includes modulating the signal in accordance with a modulation scheme determined in response to a command conveyed via the USB port.

Preferably, the transmitting of the radio frequency signal includes encoding an error correction onto the signal in accordance with an encoding scheme determined responsive to a command conveyed via the USB port.

There is further provided, in accordance with a preferred embodiment of the present invention, a method for transmitting and receiving signals between a satellite and a personal computer including: (a) coupling a single transceiver card to an industry-standard bus in the computer; (b) transmitting radio frequency signals from the single transceiver card responsive to data from the bus; and (c) receiving radio frequency signals to the single transceiver card and converting the received signals to data for transfer to the bus.

Preferably, the method further includes the step of coupling the transmitting section and the receiving section together directly via an auxiliary bus separate from the industry-standard bus.

Preferably, the method further includes the step of mounting a power connector on the card and powering an antenna system external to the card via the power connector.

Preferably, the method further includes the step of determining a frequency band of the signal using the data conveyed to the card.

Preferably, the transmitting of the radio frequency signal includes modulating the signal in accordance with a modulation scheme determined in response to a command conveyed via the industry-standard bus.

Preferably, the transmitting of the radio frequency signal includes encoding an error correction onto the signal in accordance with an encoding scheme determined responsive to a command conveyed via the industry-standard bus.

Preferably, the receiving of radio frequency signals includes conveying a synchronizing signal from the receiving section to the transmitting section via the auxiliary bus.

In further examples described herein, the communications card generates modulated radio frequency (RF) signals, which are conveyed via a coaxial cable to a power amplifier and an upconverter of an antenna system, for transmission via satellite. Power from a DC power supply is conveyed via a cable to the antenna system. Thus signals and power to operate the upconverter and the power amplifier are transferred on the coaxial cable. In further examples in which the transmitter and receiver reside on one PCI add-on board, the card can plug into an industry-standard bus in the PC and control the operation of the card and convey data to the card for transmission via the satellite. In further examples in which the transmitter and receiver are installed on separate cards in an external box, a USB hub connects USB buses from the two cards with the USB interface to the PC.

The communications card comprises a frequency synthesizer for generating and transmitting the RF signals, preferably in a range between about 950 MHz and 3000 MHz or in any sub-range therein. The signals are conveyed via the coaxial cable to the upconverter and the power amplifier, which are preferably contained in the antenna system. The power level of the signals from the synthesizer is preferably of the order of 1 mW. The upconverter and power amplifier convert the RF signals to higher frequencies and higher power for transmission by an external dish or flat-plate antenna. Most preferably, the signals are modulated by a keying modulator, having a modulation scheme that is user-selectable according to any standard modulation system, under control of the PC.

Before modulation, the signals are encoded by an encoder, also under the control of the PC, preferably using forward error correction (FEC) encoding or concatenated coding.

In some further examples described herein, the communications card comprises a fast parallel bus for communicating directly between the transmitter and receiver portions of the card without passing through the PCI interface or USB hub. The fast interface bus may be used for transferring a synchronizing clock recovered from signals received by the receiver card, and transmissions from the communications card may be timed accordingly, as described, for example, in U. S. Patent Application 09/135,502, entitled,"BiDirectional Communications Protocol,"to Ben-Bassat et al., which is assigned to the assignee of the present patent application.

There is, therefore provided, in accordance with a further example, a satellite transceiver for a personal computer, including: (a) a card that plugs into the personal computer that includes: (i) a transmitting section for transmitting radio frequency signals responsive to data received from an industry standard bus in the computer; and (ii) a receiving section that receives radio frequency signals and converts the received signals to data for transfer to the industry standard bus in the computer; and (b) a PCI to PCI bridge that couples industry standard buses in both the receiving section and the transmitting section with the industry standard bus in the personal computer.

Preferably, the transceiver further comprises an auxiliary bus that connects the transmitting section directly to the receiving section without passing through the PCI to PCI bridge.

Preferably, a synchronizing signal is conveyed from the receiving section to the transmitting section via the auxiliary bus.

Preferably, the transmitting section includes a frequency synthesizer for generating the radio frequency signals. The frequency of the generated signals is set, either by a controller on the card or by instructions conveyed via the industry standard buses.

Preferably, the card is coupled to an external antenna system and further includes a connector through which a DC source external to the card powers the antenna system. The transmitting section includes radio frequency modulation circuitry that is coupled to convey the radio frequency signals to the antenna via the connector. The radio frequency modulation circuitry also modulates the transmitted signals according to a predefined protocol in accordance with a command conveyed to the card via the industry-standard buses. The radio frequency modulation circuitry includes an encoder that encodes error correction into the transmitted signals according to another predefined protocol in accordance with a command conveyed to the encoder via the industry-standard buses.

Preferably, the signals are transmitted to a satellite.

### BRIEF DESCRIPTION OF THE DRAWINGS

The present invention is illustrated by way of example and not limitation in the accompanying figures in which like reference numerals indicate similar elements and in which:
FIG. 1 is a schematic block diagram of a communications terminal coupled to an antenna system according to a preferred embodiment of the invention;
FIG. 2 is a schematic block diagram of a personal computer RF transmission card according to a preferred embodiment of the present invention;
FIG. 3 is a schematic block diagram of a personal computer RF transmission card coupled to a PC receiver card according to a preferred embodiment of the present invention;
FIG. 4 is a schematic block diagram of a personal computer RF transmitter and receiver on one card according to a preferred embodiment of the present invention; and
FIG. 5 is a schematic block diagram of an RF transmission card coupled to a receiver card residing in a USB box according to a preferred embodiment of the present invention.

### DETAILED DESCRIPTION

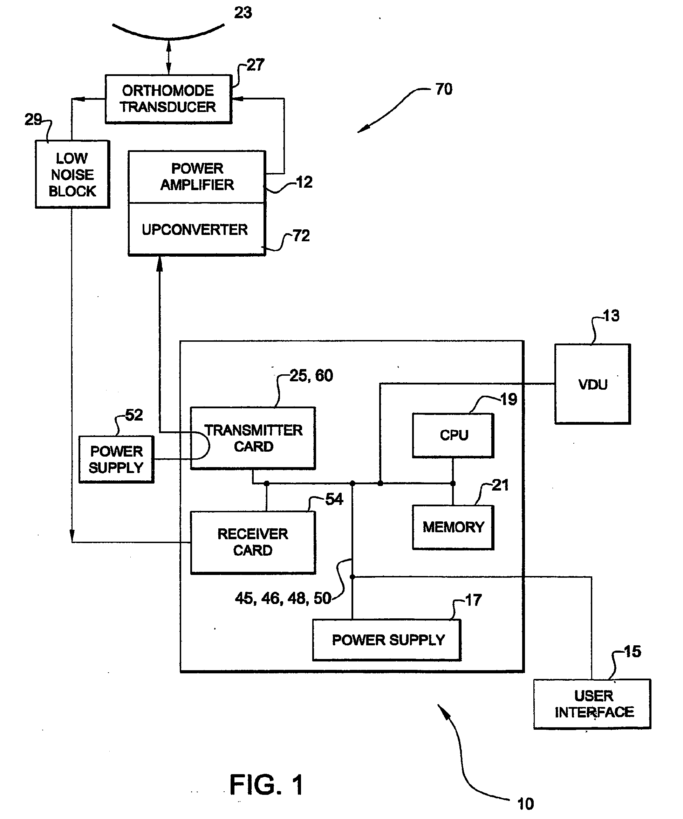

Reference is now made to Figure 1, which is a schematic block diagram of a communications terminal 10 coupled to an antenna system 70 according to a preferred embodiment of the present invention. In terminal 10 a transmitter card 25 or 60 is installed in a vacant slot of an industry-standard bus 45, such as a PCI bus, comprising an address bus 46, a data/control signal bus 48, and a power bus 50, as well as additional lines, of a personal computer 11. The busses of the computer are in communication with corresponding busses of the card, and the output of the card is fed to antenna system 70. The operation of transmitter cards 25 and 60 is described in detail herein below.

Preferably, computer 11 comprises the following standard components: a video display unit (VDU) 13, a user interface device 15 comprising a mouse and/or a keyboard, a central processing unit (CPU) 19, such as an Intel Pentium processor, a memory 21 comprising volatile (generally RAM) memory and non-volatile memory, such as a hard disk, and a power supply 17. Power supply 17 powers the abovementioned standard components and the transmitter card. Preferably, personal computer 11 also comprises a receiver card 54, receiving its input from antenna system 70. Receiver card 54 is installed in a vacant slot of computer 11 and is connected thereby to bus 45.

Preferably, antenna system 70 comprises the following industry-standard components: a dish or flat plate antenna 23, an orthomode transducer 27, a low noise block 29, an upconverter 72, and a power amplifier 12. Transducer 27 directs signals received by antenna 23 to low noise block 29, wherein the received signals are amplified and downconverted to a lower frequency, and are then transferred to receiver card 54. Upconverter 72 converts transmitted signals from transmitter card 25 or 60 to a higher frequency range, typically a range in the Ku band, and the converted signals are then amplified in power amplifier 12. The converted signals are transferred via transducer 27 for transmission by antenna 23. Most preferably, power for upconverter 72 and amplifier 12 is supplied from power supply 52 via transmitter card 25 or 60, as described below.

As will be seen below, transmitter cards 25 and 60 are similar. The main difference between transmitter cards 25 and 60 is that transmitter card 25 communicates with receiver card 54 exclusively via bus 45, whereas transmitter card 60 also communicates with receiver card 54 via a fast interface bus connector, described below, that enables the exchange of data between transmitter card 60 and receiver card 54 without the delays associated with bus 45.

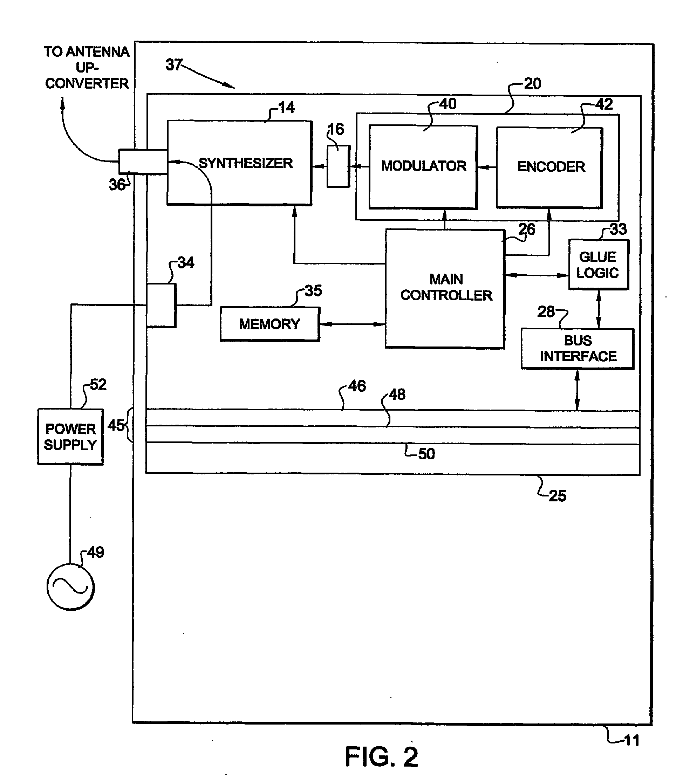

Figure 2 is a schematic block diagram of transmitter card 25 according to a preferred embodiment of the present invention. Preferably, all active components of card 25 are powered from power bus 50. A dedicated programmable main controller 26 controls the functioning of card 25. Most preferably, controller 26 is a high performance integrated communications controller, such as a QUICC 68360 produced by Motorola Inc., of Phoenix, Arizona. Controller 26 is provided with a memory 35 for data storage. Controller 26 communicates with busses 46, 48, and 50 via a glue logic device 33 and a bus interface device 28, such as a PLX9080, produced by PLX Technology Inc, of Sunnyvale, California. Controller 26 and other components on card 25 communicate with and are controlled by CPU 19 of personal computer 11, via busses 46 and 48.

Modulation circuitry 37 comprises frequency synthesizer 14 and associated circuits providing a baseband-modulated input thereto, as described further herein below. Synthesizer 14 generates and transmits an RF signal, preferably in the range 950 MHz -3000 MHz, or in any sub-range therein. Most preferably, synthesizer 14 is in a well-shielded and grounded enclosure, in order to substantially reduce noise transfer from the computer to the RF signal, and vice versa, as is known in the art. Preferably, synthesizer 14 is capable of supplying of the order of 1 mW of RF signal power into a connector 36. Most preferably, connector 36 comprises a 75 Ohm impedance F-type connector that in turn supplies the signal via a suitable coaxial cable to antenna system 70.

To generate on the order of 1 Watt of RF power, which is the power typically required for transmission of signals via satellite, system 70 generally requires on the order of 50 Watts of DC power at 24 VDC. Preferably, the power is supplied by a DC power supply, external to the card and to the computer, the power supply receiving its power directly from an AC line source 49, preferably operating in the 100-240 VAC range. The DC power is fed to antenna system 70 via a suitable power connector 34 on card 25 and via connector 36.

Synthesizer 14 generates a specific radio frequency for a chosen channel of communication for example 1000 MHz, according to commands received from controller 26. The radio frequency is modulated using baseband signal levels from a digital-analog converter 16, so that the modulated signal output from the synthesizer is compatible with an industry-standard protocol. Preferably, converter 16 also comprises a low-pass baseband filter to smooth the signals produced during the conversion.

The baseband signals provided to converter 16 are generated by a keying modulator 40 and a forward error correction (FEC) encoder 42, whose respective functions are described in more detail herein below. Most preferably, the functions of keying modulator 40 and encoder 42 are realized in a single field programmable gate array (FPGA) 20, such as a FLEX6000 produced by Altera Corporation of San Jose, California. FPGA 20 is programmed by main controller 26, or alternatively from PC bus 46 and/or PC bus 48, in accordance with instructions stored in memory 21 (Figure 1). Alternatively, two or more field-programmable devices may be used for implementing the modulator and encoder, and/or factory-programmed or hard-wired logic may be used for this purpose. Further alternatively, one or more application specific integrated circuits (ASICs) may be used for implementing the modulator and encoder.

Keying modulator 40 supplies modulation signals in a standard format, such as one of the phase shift keying (P5K) formats known in the art, for example MSK, BPSK, DPSK, QPSK, or OQPSK. The format may be chosen according to whatever particular protocol is required by a receiving station, such as a VSAT hub, that is to receive the signals from card 25, and is loaded into FPGA 29 as described above. It will be understood that where the format needs to be changed, e.g., for transmission to a different receiving station, FPGA 20 may be reprogrammed by the PC, preferably by loading a suitable program into FPGA 20 from memory 21 via bus 45 and main controller 26. The reprogramming may be performed automatically according to a communications channel that is chosen, or may be performed via user interface 15 (Figure 1).

The data input to FPGA 20 is derived from the information to be transmitted, and is received by FPGA 20 from controller 26. For example, the data may comprise IP packets transmitted on any suitable bus known in the art.

Encoder 42 generates an optional forward error correction (FEC) signal for encoding onto the transmitted signal, by one of the standard methods known in the art such as Viterbi, concatenated, Turbo, or Reed-Solomon coding. Typically, the FEC encoding adds some redundant information to the transmitted signal, for the purpose of improving signal recovery at the receiver. The method chosen is dependent on the requirements of the receiving station, and is programmable into FPGA 20 as described above.

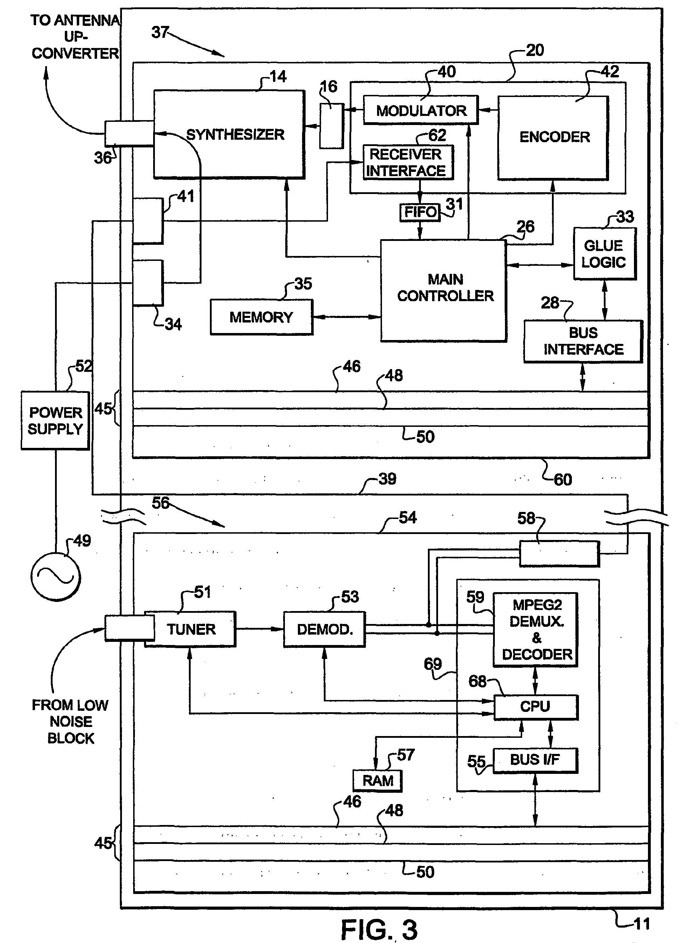

Reference is now made to Figure 3, which is a schematic block diagram of a transmission card 60 according to a preferred embodiment of the present invention. Apart from the differences described below, card 60 is generally similar to card 25 (Figure 2), and elements indicated by the same reference numerals in both card 25 and card 60 are generally identical in construction and operation. In addition to the elements of card 25, card 60 comprises an auxiliary connector, to wit, a fast interface bus connector 41, which is coupled to transfer signals to and from controller 26 via a receiver interface 62 and a first-in first-out (FIFO) buffer 31. Preferably, interface 62 is a functional block contained in FPGA 20. Connector 41 enables signals to be sent to and from other cards in the personal computer having similar fast interface bus connectors, without the delay and jitter introduced by standard PC busses.

Most preferably, connector 41 is connected by a cable 39 or mating connector to a similar connector 58 on receiver card 54 installed in the PC and is used for routing data and synchronize the operation of the transmitter and receiver cards, for example, as described in the abovementioned U.S. patent application 09/135,502. Receiver card 54 comprises receiver circuitry. 56, described in detail herein below, which communicates directly with connector 41, and also communicates with busses 46, 48, and 50. Preferably, when the receiver and transmitter cards are communicating with a remote receiver/transmitter, such as a VSAT hub, using a slotted communications protocol, the receiver card transfers data directly to the transmitter card using auxiliary bus 61 via fast interface bus connector 41. Controller 26 recovers a synchronizing pulse from the data, and uses the synchronizing pulse to time the transmissions of card 60 according to the protocol being used.

Receiver circuitry 56 most preferably comprises a tuner 51, a demodulator 53, and a controller 69 that includes an MPEG2 demultiplexer and decoder device 59, a CPU 68 and a bus interface 55. Tuner 51 receives incoming signals, typically digital video broadcast (DVB) signals, from Low Noise Block 29 of antenna system 70 (Figure 1) and divides the signals to I and Q components, as is known in the art. Demodulator 53 demodulates and converts the I and Q signals to digital data, and transfers the data to CPU 68 of controller 69. Most preferably, the data from demodulator 53 is also transferred to connector 58 and from connector 58 to card 60, as described hereinabove. CPU 68 utilizes a RAM 57 to store interim data used in the operation of device 59. Controller 69 communicates with bus 45 via bus interface 55.

There are a number of advantages of integrating the two boards 37 and 41 into one board. First, only one PCI slot is needed instead of two, thereby enabling usage of the other slot for different purposes. Second, installation is simplified. Finally, the integration reduces the size of the transceiver, and packaging and logistical costs.

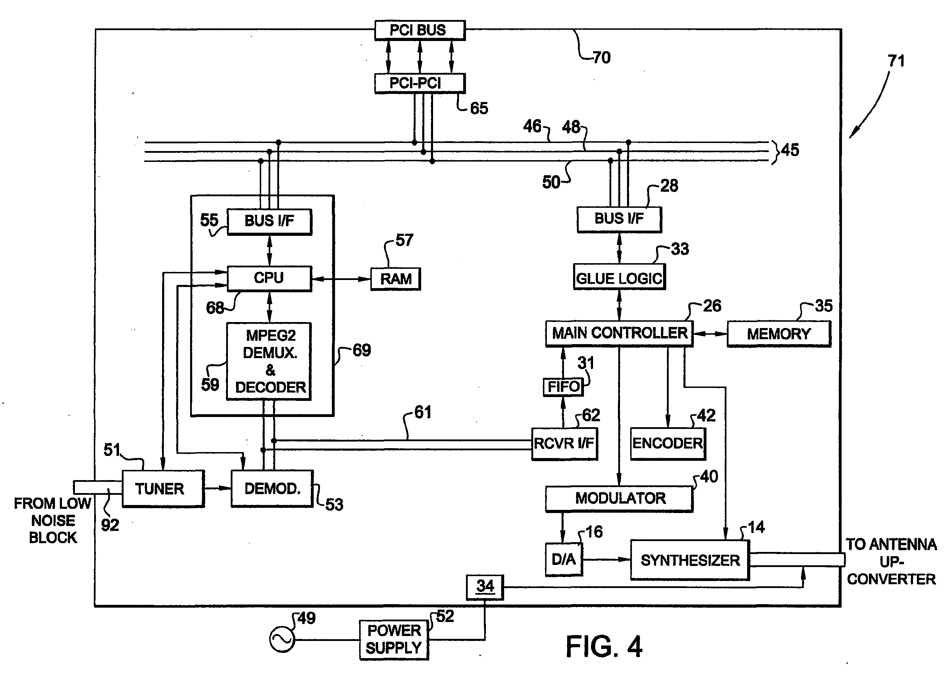

Figure 4 illustrates a transceiver 71 on one PCI card 70 to be installed in a personal computer. As embodiment 71 is similar to the embodiment of Figure 3, only the differences will be mentioned. Connectors 41, and 58 and cable 39 are no longer necessary due to the unification of the transmitter 37 and receiver 56 cards of Figure 3 into one card 70. A PCI to PCI bridge 65 connects bus 45 in the receiver section of card 70 and bus 45 in the transmission section of card 70 with bus 45 of the PC. Receiver interface 62 is connected directly through a fast interface bus 61 to the transmission section of board 70.

As the USB standard currently enables a single PC USB port to connect over one hundred peripheral devices, the standard is expected to become more widespread. It would therefore be advantageous to have a transceiver that connects to the PC according to the USB standard.

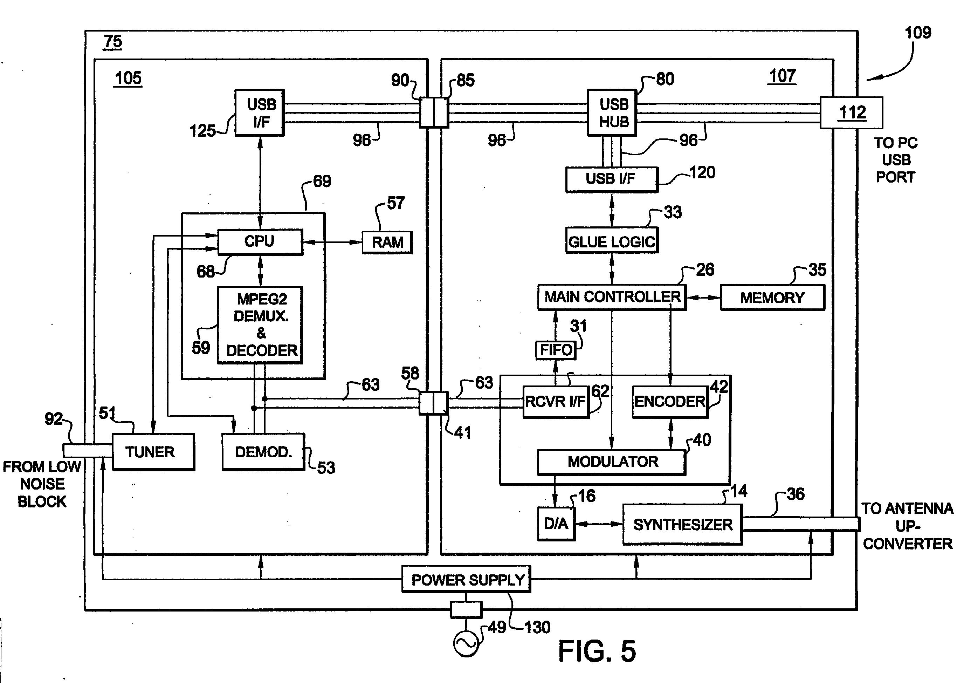

Figure 5 illustrates a transceiver 109 that resides in an external box 75 and interfaces with the PC host through a connector 112. Transceiver 109 includes a transmitter card 107 and a receiver card 105. As transmitter card 107 and receiver card 105 are similar to transmitter card 60 and receiver card 54 respectively of Figure 3, only the differences will be noted. Connectors 58 and 41 are female and male connectors that directly connect cards 107 and 105, eliminating the need for cable 39. USB bus interfaces 120 and 125 replace bus interfaces 28 and 55 respectively. A USB bus 96 replaces bus 45. USB bus 96 extends through both cards 105 and 107 into the PC USB port (not shown). A USB hub 80 located on transmitter card 107 provides a connection point to receiver card 105 through connector blocks 85 and 90 and USB interface 125. USB hub 80 is also connected directly to USB interface 120. A fast interface bus 63 connects card 105 directly, without passing through USB hub 80, to receiver interface 62 via connectors 58 and 41. As transceiver 109 resides in external box 75, an internal power supply 130 supplies the voltages to all components on cards 105 and 107, to connector 36 and to a connector 92 for the low noise block. Internal power supply 130 receives power from AC line source 49 via a power connector 114. Internal power supply 130 replaces DC power supply 52, and connector 34 of Figure 3.

While the present invention has been described in connection with the illustrated embodiments; it will be appreciated and understood that modifications may be made without departing from the scope of the invention.

The following is a list of numbered features which have been described herein.
Feature 1. A satellite transceiver for a personal computer, comprising:
   a card that plugs into the personal computer that includes:
      a transmitting section transmitting radio frequency signals responsive to data received from an industry standard bus in the computer, and
      a receiving section receiving radio frequency signals and converting the received signals to data for transfer to the industry standard bus in the computer; and
      a PCI to PCI bridge that couples industry standard buses in both the receiving section and the transmitting section with the industry standard bus in the personal computer.
Feature 2. The transceiver according to feature 1, further comprising: an auxiliary bus directly connecting the transmitting section and the receiving section without passing through the PCI to PCI bridge.
Feature 3. The transceiver according to feature 2, wherein a synchronizing signal is conveyed from the receiving section to the transmitting section via the auxiliary bus.
Feature 4. The transceiver according to feature 1, wherein the transmitting section includes a frequency synthesizer for generating the radio frequency signals.
Feature 5. The transceiver according to feature 4, wherein the frequency generated by the frequency synthesizer is set by a controller on the card.
Feature 6. The transceiver according to feature 4, wherein the frequency generated by the frequency synthesizer is set by conveying instructions via the bus.
Feature 7. The transceiver according to feature 1, wherein the card is coupled to an external antenna system, and further comprising a connector, through which a DC source external to the card powers the antenna system.
Feature 8. The transceiver according to feature 7, wherein the transmitting section includes radio frequency modulation circuitry and the modulation circuitry is coupled to convey the radio frequency signals to the antenna system via the connector.
Feature 9. A transceiver according to feature 1, wherein the transmitting section includes radio frequency modulation circuitry and the modulation circuitry modulates the transmitted signals according to a predefined protocol in accordance with a command conveyed to the card via the industry-standard bus.
Feature 10. A transceiver according to feature 1, wherein the transmitting section includes modulation circuitry and the modulation (circuitry includes an encoder that encodes error correction into the transmitted signals according to a predefined protocol in accordance with a command conveyed to the encoder via said industry-standard bus.
Feature 11. A transceiver according to feature 1, wherein the signals are transmitted to a satellite.
Feature 12. A satellite transceiver for a personal computer, the personal computer having a USB port, the transceiver comprising:
   a transmitter card that resides in a box external to the computer and that transmits radio frequency signals responsive to data received from the personal computer via the USB port; and
   a receiver card that resides in the external box and that receives radio frequency signals and converts the received signals to data for transfer to the personal computer via the USB port.
Feature 13. The transceiver according to feature 12, wherein the transmitter card and the receiver card include respective USB interfaces, the transceiver further including a USB hub which couples the USB port to said USB interfaces via a USB bus.
Feature 14. The transceiver according to feature 12, further including an auxiliary bus directly connecting the transmitter card and the receiver card.
Feature 15. The transceiver according to feature 14, wherein a synchronizing signal is conveyed from the receiver card to the transmitter card via the auxiliary bus.
Feature 16. The transceiver according to feature 15, wherein the transmitter card and the receiver card further comprise respective connectors coupling the cards to the auxiliary bus.
Feature 17. The transceiver according to feature 12, further including an internal DC source residing in the box for supplying power to the transmitter card and the receiver card.
Feature 18. The transceiver according to feature 12, wherein the transmitter card includes a frequency synthesizer for generating the radio frequency signals.
Feature 19. The transceiver according to feature 18, wherein the frequency generated by the frequency synthesizer is set by a controller on the transmitter card.
Feature 20. The transceiver according to feature 18, wherein the frequency generated by the frequency synthesizer is set by conveying instructions via the USB port.
Feature 21. The transceiver according to feature 12, wherein the transceiver is coupled to an external antenna system, further comprising a connector, through which a DC source, internal to the box, powers the antenna system.
Feature 22. A transceiver according to feature 21, wherein the transmitter card includes radio frequency modulation circuitry that is coupled to convey the radio frequency signals to the antenna system via the connector.
Feature 23. A transceiver according to feature 12; wherein the transmitter card includes radio frequency modulation circuitry and the modulation circuitry modulates the transmitted signals according to a predefined protocol in accordance with a command conveyed to the card via the USB port.
Feature 24. A transceiver according to feature 12, wherein the transmitter card includes modulation circuitry and the modulation circuitry includes an encoder that encodes error correction into the transmitted signals according to a predefined protocol in accordance with a command conveyed to the encoder via the USB port.
Feature 25. The transceiver according to feature 12, wherein the signals are transmitted to a satellite.
Feature 26. A method for transmitting and receiving signals between a satellite and a personal computer having a USB port, the method comprising steps of:
   coupling a transmitter card that resides in a box external to the personal computer to a USB hub through a portion of a USB bus;
   coupling the USB hub to the USB port;
   transmitting a radio frequency signal from the transmitter card responsive to data received from the USB port;
   coupling a receiver card that resides in the box to the USB hub through another portion of the USB bus;
   receiving the radio frequency signal in the receiver card; and
   converting the radio frequency signal to data for transfer to the USB port.
Feature 27. The method according to feature 26, further comprising a step of coupling the transmitter and receiver cards together directly via an auxiliary bus.
Feature 28. The method according to feature 26, further comprising steps of:
   mounting a power connector on the box, and
   powering an antenna system external to the box via the power connector.
Feature 29. The method according to feature 26, further comprising a step of determining a frequency band of the signal using the data received by the transmitter card.
Feature 30. The method according to feature 26, wherein the step of the transmitting radio frequency signal includes modulating the radio frequency signal in accordance with a modulation scheme determined responsive to a command conveyed via the USB port.
Feature 31. The method according to feature 26, wherein the step of the transmitting radio frequency signal includes encoding an error correction onto the radio frequency signal in accordance with an encoding scheme determined responsive to a command conveyed via the USB port.
Feature 32. A method according to feature 26, wherein the step of transmitting the radio frequency signal includes transmitting the radio frequency signal to the satellite.
Feature 33. A method according to feature 26, wherein the step of receiving the radio frequency signal includes conveying a synchronizing signal from the receiver card to the transmitter card via the auxiliary bus.
Feature 34. A method for transmitting and receiving signals between a satellite and a personal computer, the method comprising steps of
   coupling a single transceiver card to an industry-standard bus in the computer;
   transmitting a radio frequency signal from the single transceiver card responsive to data from the bus; and
   receiving radio frequency signal transmitted to the single transceiver card and converting the received radio frequency signals to data for transfer to the bus.
Feature 35. The method according to feature 34, further comprising a step of coupling the transmitting section and receiving sections of the transceiver card together directly via an auxiliary bus separate from the industry-standard bus.
Feature 36. The method according to feature 34, further comprising a step of mounting a power connector on the card, and powering an antenna system external to the card via the power connector.
Feature 37. The method according to feature 34, further comprising a step of determining a frequency band of the signal using the data conveyed to the card.
Feature 38. The method according to feature 34, wherein the step of transmitting the radio frequency signal includes modulating the signal in accordance with a modulation scheme determined responsive to a command conveyed via the bus.
Feature 39. The method according to feature 34, wherein the step of transmitting the radio frequency signal includes encoding an error correction onto the radio frequency signal in accordance with an encoding scheme determined responsive to a command conveyed via the bus.
Feature 40. The method according to feature 34, wherein the step of transmitting the radio frequency signal includes transmitting the radio frequency signal to the satellite.
Feature 41. A method according to feature 35, wherein the step of receiving the radio frequency signal includes conveying a synchronizing signal from the receiving section card transmitting section via the auxiliary bus.

## Claims

1. A satellite transceiver for communication between a satellite and a personal computer (11), the personal computer (11) being equipped with a USB (Universal Serial Bus) port, **characterised in that** the satellite transceiver resides in a box external to the personal computer (11) and is equipped with a USB port for interfacing with the personal computer (11), the transceiver comprising:
a transceiver card (25, 60) with means for receiving data from the personal computer (11) via the USB port, means for converting the data to radio frequency signals and means for transmitting these signals to the satellite;
a receiver card (54) with means for receiving radio frequency signals from the satellite, means for converting the radio frequency signals to data for transmission to the computer via the USB port and means for transmitting the data to the computer.

2. The transceiver according to claim 1 wherein the transmitter card (25, 60) and the receiver card (54) include respective USB interfaces, the transceiver further including a USB hub (80) which couples the USB port to said USB interfaces via a USB bus (96).

3. The transceiver according to claim 1 or 2, further including an auxiliary bus (61) directly connecting the transmitter card (25, 60) and the receiver card (54).

4. A method for communication between a satellite and a personal computer (11), the personal computer (11) being equipped with a USB (Universal Serial Bus) port, **characterised in that** a satellite transceiver residing in a box external to the personal computer (11) and equipped with a USB port for interfacing the personal computer (11) is used for communication between the personal computer (11) and the satellite, the method comprising the steps of:
with a transmitter card (25, 60) of the satellite transceiver, receiving data from the personal computer (11) via the USB port, converting the data to radio frequency signals and transmitting these signals to the satellite;
with a receiver card (54) of the satellite transceiver, receiving radio frequency signals from the satellite, converting the radio frequency signals to data for transmission to the personal computer (11) via the USB port and transmitting the data to the computer (11).

5. The method according to claim 4, further comprising the step of coupling the transmitter card (25, 60) to a USB hub (80) through a portion of a USB bus (96); coupling the USB hub (80) to the USB port; coupling the receiver card (54) to the USB hub (80) through another portion of the USB bus (96).

6. The method according to claim 4 or 5, further comprising a step of determining a frequency band of the signal using the data received by the transmitter card (25, 60).

## Patentansprüche

1. Satelliten-Transceiver für eine Kommunikation zwischen einem Satelliten und einem Personalcomputer (11), wobei der Personalcomputer (11) mit einem USB- (Universal Serial Bus) Port ausgestattet ist,
**dadurch gekennzeichnet, dass** der Satelliten-Transceiver in einem Gehäuse extern vom Personalcomputer (11) aufgenommen ist und einen USB-Port für eine Verbindung mit dem Personalcomputer (11) aufweist,
wobei der Transceiver aufweist:
eine Senderkarte (25, 60) mit einer Einrichtung zum Empfangen von Daten über den USB-Port vom Personalcomputer (11), einer Einrichtung zum Umwandeln der Daten in Funkfrequenzsignale und einer Einrichtung zum Übertragen dieser Signale zum Satelliten; und
eine Empfängerkarte (54) mit einer Einrichtung zum Empfangen von Funkfrequenzsignalen vom Satelliten, einer Einrichtung zum Umwandeln der Funkfrequenzsignale in über den USB-Port zum Personalcomputer zu übertragende Daten und einer Einrichtung zum Übertragen der Daten zum Computer.

2. Transceiver nach Anspruch 1, wobei die Senderkarte (25, 60) und die Empfängerkarte (54) jeweilige USB-Schnittstellen aufweisen, und wobei der Transceiver ferner einen USB-Hub (80) aufweist, der den USB-Port über einen USB-Bus (96) mit den USB-Schnittstellen verbindet.

3. Transceiver nach Anspruch 1 oder 2, ferner mit einem Zusatzbus (61) zum direkten Verbinden der Senderkarte (25, 60) mit der Empfängerkarte (54).

4. Verfahren für eine Kommunikation zwischen einem Satelliten und einem Personalcomputer (11), wobei der Personalcomputer (11) mit einem USB- (Universal Serial Bus) Port ausgestattet ist,
**dadurch gekennzeichnet, dass** ein Satelliten-Transceiver, der in einem Gehäuse extern vom Personalcomputer (11) aufgenommen ist und einen USB-Port für eine Verbindung mit dem Personalcomputer (11) aufweist, für eine Kommunikation zwischen dem Personalcomputer (11) und dem Satelliten verwendet wird,
wobei das Verfahren die Schritte aufweist:
Empfangen von Daten über den USB-Port vom Personalcomputer (11), Umwandeln der Daten in Funkfrequenzsignale und Übertragen dieser Signale zum Satelliten durch eine Senderkarte (25, 60);
Empfangen von Funkfrequenzsignalen vom Satelliten, Umwandeln der Funkfrequenzsignale in über den USB-Port zum Personalcomputer (11) zu übertragende Daten und Übertragen der Daten zum Computer (11) durch eine Empfängerkarte (54).

5. Verfahren nach Anspruch 4, ferner mit den Schritten:
Verbinden der Senderkarte (25, 60) über einen Teil eines USB-Busses (96) mit einem USB-Hub (80);
Verbinden des USB-Hubs (80) mit dem USB-Port; und
Verbinden der Empfängerkarte (54) über einen anderen Teil des USB-Busses (96) mit dem USB-Hub (80).

6. Verfahren nach Anspruch 4 oder 5, ferner mit einem Schritt zum Bestimmen eines Frequenzbandes des Signals unter Verwendung der durch die Senderkarte (25, 60) empfangenen Daten.

## Revendications

1. Émetteur - récepteur de satellite destiné à une communication entre un satellite et un ordinateur personnel (11), l'ordinateur personnel (11) étant doté d'un port USB (acronyme de Universal Serial Bus, ce qui signifie bus série universel), **caractérisé en ce que** l'émetteur - récepteur de satellite se situe dans un boîtier extérieur à l'ordinateur personnel (11) et est doté d'un port USB afin de s'interfacer avec l'ordinateur personnel (11), l'émetteur - récepteur comprenant :
une carte émetteur - récepteur (25, 60) dotée de moyens de réception de données en provenance de l'ordinateur personnel (11) par l'intermédiaire du port USB, de moyens de conversion des données en signaux radioélectriques et de moyens de transmission de ces signaux vers le satellite ;
une carte récepteur (54) dotée de moyens de réception de signaux radioélectriques en provenance du satellite, de moyens de conversion des signaux radioélectriques en données destinées à être transmises à l'ordinateur par l'intermédiaire du port USB, et de moyens de transmission des données à l'ordinateur.

2. Émetteur - récepteur selon la revendication 1, dans lequel la carte émetteur (25, 60) et la carte récepteur (54) incluent des interfaces USB respectives, l'émetteur - récepteur comprenant en outre un concentrateur USB (80) qui relie le port USB auxdites interfaces USB par l'intermédiaire d'un bus USB (96).

3. Émetteur - récepteur selon la revendication 1 ou la revendication 2, comprenant en outre un bus auxiliaire (61) qui relie directement la carte émetteur (25, 60) et la carte récepteur (54).

4. Procédé de communication entre un satellite et un ordinateur personnel (11), l'ordinateur personnel (11) étant doté d'un port USB (bus série universel), **caractérisé en ce qu'**un émetteur - récepteur de satellite qui se situe dans un boîtier extérieur à l'ordinateur personnel (11) et est doté d'un port USB afin de s'interfacer avec l'ordinateur personnel (11), est utilisé pour une communication entre l'ordinateur personnel (11) et le satellite, le procédé comprenant les étapes consistant à :
grâce à une carte émetteur (25, 60) de l'émetteur - récepteur de satellite, recevoir des données en provenance de l'ordinateur personnel (11) par l'intermédiaire du port USB, convertir les données en signaux radioélectriques et transmettre ces signaux vers le satellite ;
grâce à une carte récepteur (54) de l'émetteur - récepteur de satellite, recevoir des signaux radioélectriques en provenance du satellite, convertir les signaux radioélectriques en données destinées à être transmises à l'ordinateur personnel (11) par l'intermédiaire du port USB, et transmettre les données à l'ordinateur (11).

5. Procédé selon la revendication 4, comprenant en outre l'étape consistant à relier la carte émetteur (25, 60) à un concentrateur USB (80) par l'intermédiaire d'une partie d'un bus USB (96) ; relier le concentrateur USB (80) au port USB ; relier la carte récepteur (54) au concentrateur USB (80) par l'intermédiaire d'une autre partie du bus USB (96).

6. Procédé selon la revendication 4 ou la revendication 5, comprenant en outre une étape consistant à déterminer une bande de fréquences du signal en utilisant les données reçues par la carte émetteur (25, 60).
